# EUROPEAN PATENT APPLICATION

(11) **EP 4 826 869 A1**
(43) Date of publication of application: **21.10.2026**
(21) Application number: 26168009.4
(22) Date of filing: 26.03.2026
(51) Int. Cl.: H01M 50/209, H01M 10/613, H01M 10/647, H01M 10/658, H01M 50/264, H01M 50/271, H01M 50/289

(54) **BATTERY MODULE**

(30) Priority: 10.04.2025 KR 20250047031
(71) Applicant: SK On Co., Ltd., Seoul 03161 (KR)
(72) Inventor: JUNG, Ho Young, 34124 Daejeon (KR); PARK, Hyeon Jin, 34124 Daejeon (KR); SAGONG, Kang, 34124 Daejeon (KR); SON, Sol San, 34124 Daejeon (KR); LEE, Seung Hun, 34124 Daejeon (KR)
(74) Representative: Prüfer & Partner mbB Patentanwälte · Rechtsanwälte

(57) **Abstract**

The present disclosure relates to a battery module including at least one battery cell. The battery module comprises a housing (100) in which at least one battery cell (211) is arranged, a heat blocking assembly (300) arranged on at least a surface of the battery cell (211), and an upper bracket (400) arranged on an upper portion of the battery cell (211). Based on a height direction of the battery cell (211), at least a portion of the upper bracket (400) is in surface contact with the heat blocking assembly (300).

## Description

### TECHINICAL FIELD

The present disclosure relates to a battery module including at least one battery cell.

### BACKGROUND

As usage and application areas of batteries rapidly increase, and a capacity of the batteries also greatly increases, battery modules, which electrically connect multiple battery cells, and battery packs, which connect the battery modules as unit modules, are used in medium and large-sized devices.

The battery cells constituting the battery module or the battery pack may generate a large amount of heat due to various factors, such as charging and discharging processes, short circuit, or exposure to a high temperature.

If the heat is not removed, or if an overheated heat source in an area moves to an adjacent area, heat accumulation may occur, resulting in a reduction in performance of the battery module and even the risk of fire or explosion of the battery in some cases.

### SUMMARY

According to an aspect of the present disclosure, there is provided a battery module capable of preventing heat energy generated by thermal runaway or ignition of a battery cell from being transmitted to other adjacent battery cells.

A battery module according to some embodiments of the present disclosure may comprise a housing in which at least one battery cell is arranged, a heat blocking assembly arranged on at least a surface of the battery cell, and an upper bracket arranged on an upper portion of the battery cell. Based on a height direction of the battery cell, at least a portion of the upper bracket may be in surface contact with the heat blocking assembly.

In some embodiments, the upper bracket may comprise a base portion arranged on the upper portion of the battery cell, and a side portion extending from the base portion to the upper portion of the battery cell.

In some embodiments, based on an upper surface of the battery cell, a height of the side portion may be equal to or greater than a height of the heat blocking assembly.

In some embodiments, the upper bracket may further comprise a bent portion connecting the base portion and the side portion.

In some embodiments, the at least one battery cell may comprise a plurality of battery cells, and a plurality of upper brackets may be arranged on upper portions of the plurality of battery cells. The battery module may further comprise an upper clip connecting the adjacent upper brackets.

In some embodiments, the upper clip may pressurize and connect the upper brackets.

In some embodiments, the upper clip may comprise an upper plate, a pair of side plates bent downward from both ends of the upper plate, and a pair of lower plates extending from lower ends of the pair of side plates in a direction approaching each other.

In some embodiments, a pair of side portion may extend from both ends of the base portion, respectively, and the side plates may be in surface contact with the side portions and pressurize the pair of side portions in a direction approaching each other.

In some embodiments, a fitting groove may be formed on an outer surface of the side portion, and an end of the lower plate may be inserted into the fitting groove.

In some embodiments, a distance between inner surfaces of the side plates may be equal to or less than a distance between outer surfaces of the adjacent side portions.

In some embodiments, the side portion may comprise a plurality of side portions, and the upper bracket may further comprise a connection portion connecting the side portions which are adjacent to each other. At least a portion of the heat blocking assembly may be arranged between the adjacent side portions.

In some embodiments, a plurality of battery cells may be accommodated in the housing. The heat blocking assembly may comprise a first blocking member arranged between the plurality of battery cells, and a compression member arranged between the first blocking member and the upper bracket.

In some embodiments, a height of the first blocking member may be equal to or greater than a height of the compression member.

In some embodiments, the upper bracket may comprise a first flow hole penetrating the upper bracket.

In some embodiments, the battery module may further comprise a battery cover surrounding the battery cell, and a second blocking member accommodated in the battery cover and arranged on an upper side of the battery cell. The heat blocking assembly may be arranged on at least a surface of the battery cover.

A battery module according to an embodiment of the present disclosure may comprise a housing, a plurality of battery cells arranged in the housing, a heat blocking assembly arranged between the plurality of battery cells, a height of the heat blocking assembly being formed higher than heights of the plurality of battery cells, an upper bracket arranged on upper portions of the battery cells and covering the battery cells, at least a portion of the upper bracket being bent in a direction parallel to a height direction of the battery cells, and a cover member covering the housing.

In some embodiments, the upper bracket may comprise a plurality of upper brackets. The battery module may further comprise an upper clip that couples the adjacent upper brackets and pressurizes the upper brackets in a direction approaching each other.

In some embodiments, the heat blocking assembly may comprise a first blocking member partitioning between the plurality of battery cells, and a compression member arranged between the first blocking member and the upper bracket.

In some embodiments, based on the height direction of the battery cells, an end surface of the heat blocking assembly may be positioned lower than an end surface of the upper bracket.

In some embodiments, a flow path through which air can move may be formed between the upper bracket, the battery cells, and the heat blocking assembly.

Embodiments of the present disclosure can prevent battery cells accommodated in a battery module from igniting or exploding in a chain reaction.

### BRIEF DESCRIPTION OF THE DRAWINGS

The accompanying drawings, which are comprised to provide a further understanding of the disclosure and are incorporated in and constitute a part of the disclosure, illustrate embodiments of the disclosure and together with the description serve to explain the principle of the disclosure.
FIG. 1 is a partial perspective view of a battery module according to some embodiments of the present disclosure.
FIG. 2 is an exploded perspective view of a battery module according to some embodiments of the present disclosure illustrated in FIG. 1.
FIG. 3 is a perspective view of a battery assembly according to some embodiments of the present disclosure.
FIG. 4 is a side view of a first blocking member and a compression member illustrated in FIG. 2.
FIG. 5 is a perspective view of an upper bracket illustrated in FIG. 2.
FIG. 6 is an enlarged cross-sectional view of a portion 'A' of FIG. 5.
FIG. 7 illustrates an embodiment of a portion 'A' of FIG. 5.
FIG. 8 illustrates an embodiment of a portion 'A' of FIG. 5.
FIG. 9 is a perspective view of an upper clip illustrated in FIG. 2.
FIG. 10 is a side view of an upper clip illustrated in FIG. 9.
FIG. 11 is a cross-sectional view of a battery module according to some embodiments of the present disclosure illustrated in FIG. 1 taken along line A1-A2.
FIG. 12 is a cross-sectional view of a battery module according to some embodiments of the present disclosure illustrated in FIG. 1 taken along line B1-B2.
FIG. 13 is an enlarged view of a portion 'B' of FIG. 11.
FIG. 14 illustrates an embodiment of a portion 'B' of FIG. 11.

### DETAILED DESCRIPTION OF THE EMBODIMENTS

For convenience of explanation, some embodiments of the present disclosure will be described below with reference to exemplary drawings. When reference numerals are given to components in each drawing, the same components are indicated by the same reference numerals as much as possible, even if they appear in different drawings.

The terms or words used in the present disclosure and claims should not be limited to their general or dictionary meanings, and should be interpreted as meanings and concepts consistent with the technical spirit of the present disclosure, based on the principle that the inventor can appropriately define the concepts of terms to best explain his or her disclosure.

The terms used in the present disclosure are provided to describe a specific embodiment and are not intended to limit the present disclosure. As used in the present disclosure, the singular forms may comprise the plural forms unless the context clearly dictates otherwise.

When used to describe and assert the present disclosure, the words "comprise," "include," "consist of," and "have" should be construed in a non-exclusive manner, and unless specifically stated to the contrary, should be construed to imply that the component may be present, and thus to comprise other components rather than to exclude other components.

Furthermore, terms such as first, second, A, B, (a) and (b) may be used when describing components of an embodiment of the present disclosure. These terms are merely intended to distinguish the components from other components, and do not limit the nature, order, or sequence of the components.

When a component is described as being "connected", "coupled" or "contacted" to another component, it should be understood that the component may be directly connected or coupled to the other component, but another component may also be "connected", "coupled" or "contacted" between the component and the other component.

Spatial terms such as "beneath," "below," "lower," "above," and "upper" may be used to facilitate understanding of an element or feature illustrated in the drawings and other elements or features. These spatial terms are provided to facilitate understanding of the present disclosure in various process states or usage states of the present disclosure and are not intended to limit the present disclosure. For example, if an element or feature in the drawing is flipped, an element or feature described as "beneath" or "below" becomes "above" or "upper." Therefore, "beneath" is a concept encompassing "above" or "below."

An embodiment described in the present disclosure and the configurations illustrated in the drawings are merely the most preferred embodiment of the present disclosure and do not represent all the technical ideas of the present disclosure. Therefore, it should be understood that various equivalents and modified examples which can replace them at the time of filing this application may exist. In addition, detailed descriptions of well-known functions and configurations that may unnecessarily obscure the gist of the present disclosure are omitted.

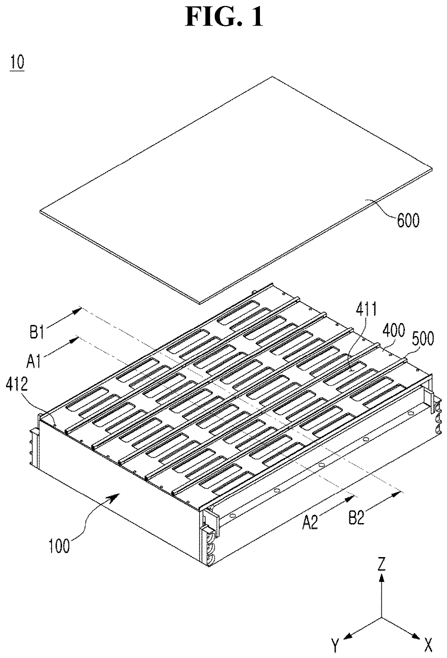

In a battery module 10 according to an embodiment of the present disclosure, an up-down direction or a height direction may refer to a direction parallel to the Z-axis illustrated in FIG. 1. A stacking direction of battery cells 211 may refer to a direction parallel to the X-axis, and a longitudinal direction of the battery cell 211 may refer to a direction parallel to the Y-axis. However, if the direction of the corresponding object changes, the expressions may be different.

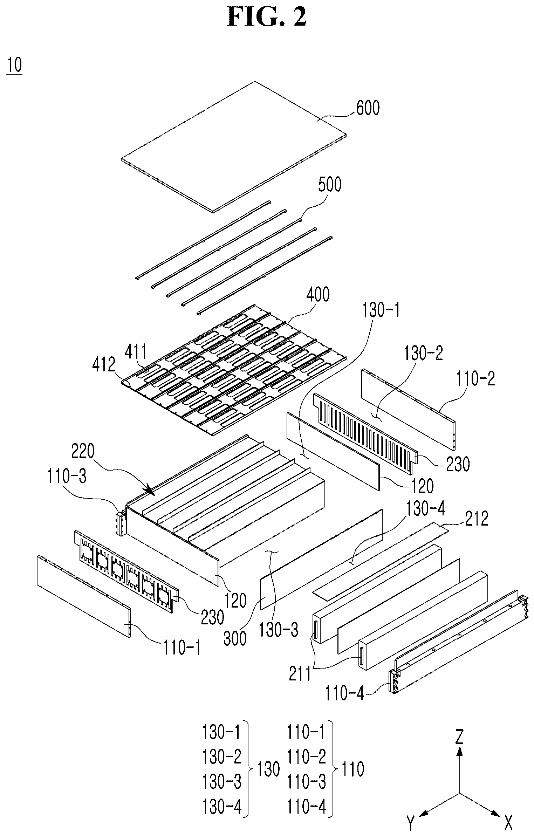

Referring to FIGS. 1 and 2, a housing 100 may comprise an accommodation space 130 that accommodates a plurality of battery cells 211 therein.

The housing 100 may comprise a main frame 110 that surrounds side surfaces of the battery cells 211. The main frame 110 may comprise first frames 110-1 and 110-2 that cover the battery cells 211 in the longitudinal direction, and second frames 110-3 and 110-4 that cover the battery cells 211 in the stacking direction. The first frames 110-1 and 110-2 and the second frames 110-3 and 110-4 may be formed integrally. Alternatively, the first frames 110-1 and 110-2 and the second frames 110-3 and 110-4 may be individually formed and then may be welded together or coupled by a fastening member such as bolts.

The housing 100 may accommodate a sub-module in the accommodation space 130. The sub-module may be a module accommodating the plurality of battery cells 211.

Alternatively, the housing 100 may directly accommodate the battery cells 211 in the accommodation space 130. That is, the battery module 10 according to an embodiment of the present disclosure may refer to a battery pack that accommodates sub-modules accommodating battery cells. The housing 100 may refer to a battery pack, in which a sub-module is omitted, directly accommodating battery cells. Alternatively, the housing 100 may refer to a frame of a sub-module accommodating battery cells.

For example, the housing 100 may comprise a frame that surrounds all the side surfaces of the battery cells 211. Alternatively, the housing 100 may be open at the top, the front, and the rear, or may be an 'I'-shaped type with upper and lower plates and a central bulkhead.

The housing 100 is not limited to a specific member or shape, as long as it is a frame that accommodates at least one battery cell 211 or at least one sub-module.

A material forming the housing 100 may comprise a material with a predetermined rigidity to protect the battery cells 211 and other electronic components accommodated in the housing 100 from an external impact. The housing 100 may comprise an electrical insulation material so that the battery cells 211 accommodated in the housing 100 can be insulated from the outside.

The accommodation space 130 may accommodate at least one battery cell 211 and a heat blocking assembly 300. Hereinafter, the plurality of battery cells 211 stacked between adjacent heat blocking assemblies 300 may be referred to as a single battery stack 220.

The battery cells 211 and a first blocking member 310 may be stacked in the accommodation space 130 in the X-axis direction (the stacking direction of the battery cells) of FIG. 2.

The battery stack 220 may comprise at least one battery cell 211. The number of battery cells 211 forming the battery stack 220 may vary depending on the required specifications of the battery module 10. In addition, the number of battery stacks 220 accommodated in the housing 100 may vary depending on the required specifications of the battery module 10. FIGS. 1 and 2 illustrate that six battery stacks 220 are accommodated in the accommodation space 130, by way of example. For example, the number of battery stacks 220 accommodated in the accommodation space 130 may be less or more than six.

An upper bracket 400 and an upper clip 500 may be arranged on an upper side of the battery cell 211. A cover member 600 may be coupled to the housing 100 and may cover the open upper portion of the housing 100.

In the housing 100, a filler portion 120 may be arranged at both ends of the battery cells 211 in the longitudinal direction (parallel to the Y-axis) in which electrode tabs of the battery cells 211 are exposed.

The filler portion 120 may comprise a silicone or silica gel component.

The filler portion 120 may be connected to the electrode tabs at both ends of the battery cell 211 to seal both ends in the longitudinal direction of the battery cell 211 in the housing 100. The filler portion 120 may partition a battery accommodation space 130-1 accommodating the battery cells 211, and an electrical component accommodation space 130-2 accommodating other electronic components such as a busbar assembly 230. When the filler portion 120 seals the battery accommodation space 130-1 accommodating the battery cells 211, heat or explosion generated from the battery cells 211 may not be transferred to the electrical component accommodation space 130-2 and may move in an upward direction (Z-axis direction) of the battery accommodation space 130-1.

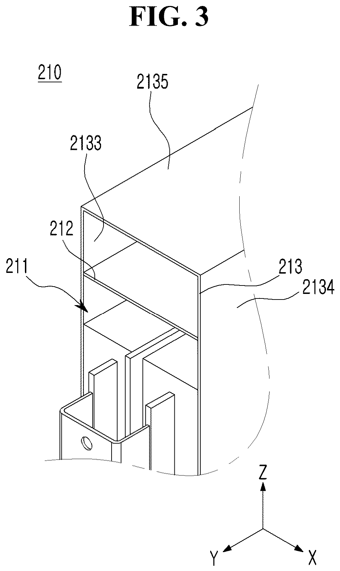

Referring to FIG. 3, a battery assembly 210 according to an embodiment may comprise the battery cell 211, a battery cover 213, and a second blocking member 212.

The battery cell 211 may comprise an electrode assembly, an electrolyte, and an outer case. The battery cell 211 may be a pouch type secondary battery. For example, the battery cell 211 may be in a form in which the electrode assembly and the electrolyte are accommodated in the pouch outer case mainly formed of a flexible metal thin film. The electrode assembly may comprise a cathode plate, an anode plate, and a separator separating them. An electrode tab may be formed on each electrode plate of the electrode assembly and may be connected to an electrode lead. In the pouch type secondary battery, one or more electrode tabs may be connected to the electrode leads. The electrode lead may be interposed between the pouch outer cases so that one end of the electrode lead is exposed to the outside, and may function as an electrode terminal. The outer case may be formed in a sealed form by forming an empty space therein to accommodate the electrode assembly and the electrolyte. The outer case of the pouch type secondary battery may be formed of aluminum or a composite material.

However, the embodiment described above is merely an example, and the battery cell 211 according to an embodiment of the present disclosure may be a can-type secondary battery as well as the pouch type secondary battery. Since the detailed configuration and materials of the secondary battery are well known and obvious, a detailed description thereof will be omitted. The battery cell according to an embodiment of the present disclosure may be selected from various secondary batteries known at the time of filing of the present disclosure.

The battery cells 211 may be electrically connected to each other. The plurality of battery cells 211 may be electrically connected by busbar assemblies 230 arranged at both ends in the longitudinal direction of the battery cell 211.

The battery cover 213 may accommodate the battery cell 211 therein. The battery cover 213 may surround at least a portion of the battery cell 211.

The battery cover 213 may comprise a first plate 2134 which is elongated correspondingly to the longitudinal direction of the battery cell 211 along the longitudinal direction of the battery cell 211, and a second plate 2133 parallel to the first plate 2134. The battery cover 213 may further comprise a third plate 2135 connecting the first plate 2134 and the second plate 2133. The third plate 2135 may be spaced apart from an upper surface (upper surface in the Z-axis direction) of the battery cell 211. For example, the first plate 2134 and the second plate 2133 may be in contact with both side surfaces in the longitudinal direction of the battery cell 211, and the third plate 2135 may be spaced apart from the upper surface of the battery cell 211.

The battery cover 213 may cover the battery cell 211 so that the electrode tab of the battery cell 211 is exposed.

The battery cover 213 may cover the battery cell 211 so that the battery cell 211 accommodated in the battery cover 213 is not in direct contact with the battery cell 211 accommodated in the adjacent battery cover 213. This can prevent heat generated from one battery cell 211 from being transferred to the adjacent battery cell 211.

The battery cover 213 may be in the form of a thin plate made of stainless steel. Additionally, the battery cover 213 may comprise other known materials.

The second blocking member 212 may be arranged between the third plate 2135 and the upper surface of the battery cell 211. The second blocking member 212 may be formed of a flame retardant material and may comprise, for example, ceramic fiber.

The second blocking member 212 may be spaced apart from the upper surface of the battery cell 211 and the third plate 2135 of the battery cover 213. The second blocking member 212 can prevent heat of the battery cell 211 positioned below from being transferred or diffused to the outside of the battery cover 213.

The battery module 10 according to an embodiment may accommodate the battery cells 211 (see FIG. 2), but may accommodate the battery assemblies 210 as described above.

When the battery cell 211 is accommodated in the battery accommodation space 130-1, the second blocking member 212 may be arranged on the upper side of the battery cell 211. When the battery cell 211 is accommodated in the accommodation space, the battery cover 213 may be omitted, thereby improving space utilization. Accordingly, a large number of battery cells 211 may be accommodated in the accommodation space of the same area.

When the battery assembly 210 is accommodated in the accommodation space 130, a transfer ability of heat emitted from each battery cell 211 may be reduced due to the battery cover 213 and the second blocking member 212. For example, even if the battery cell 211 is overheated, movement of heat may be controlled by the second blocking member 212 positioned on the upper side of the battery cell 211. Additionally, the movement of heat may be controlled by the battery cover 213 surrounding the battery cell 211. Accordingly, the movement of heat of the overheated battery cell 211 to the adjacent battery cell 211 can be controlled.

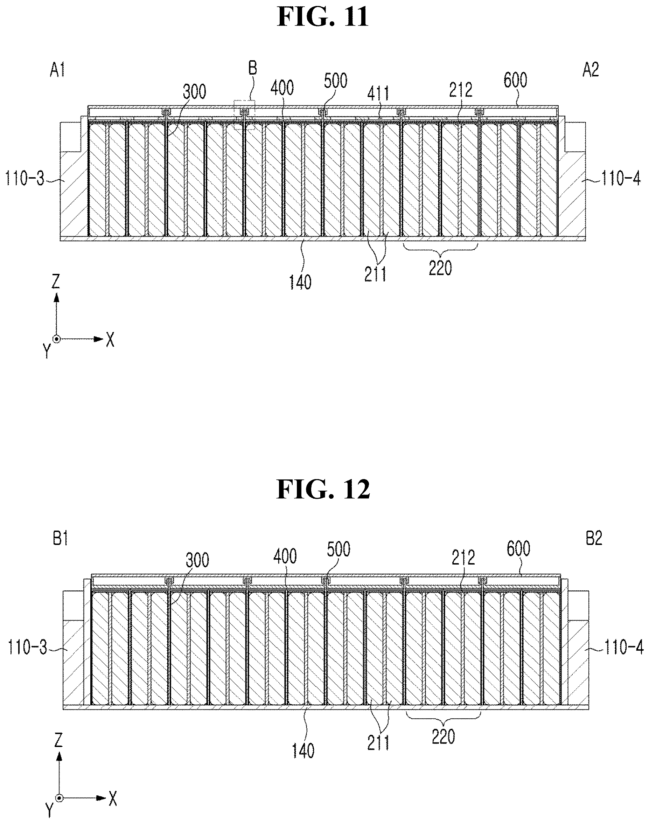

As will be described later, when the battery cell 211 is accommodated in the accommodation space 130, the second blocking member 212 may be arranged in contact with the upper surface of the battery cell 211 as illustrated in FIGS. 11 to 14.

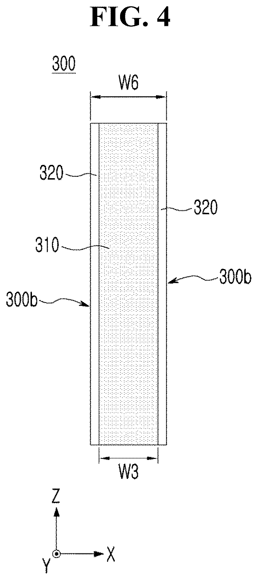

Referring to FIGS. 2 and 4, the heat blocking assembly 300 may be elongated in the longitudinal direction of the battery cell 211 (in the direction parallel to the Y-axis of FIG. 2) correspondingly to the battery cell 211. For example, when the battery cell 211 is elongated in the height direction, the heat blocking assembly 300 may also be elongated in the height direction correspondingly to the battery cell 211.

An accommodation space 130-3 in which one battery stack 220 is positioned and an accommodation space 130-4 in which the adjacent battery stack 220 is positioned may be partitioned by the heat blocking assembly 300. Both ends of the heat blocking assembly 300 may be in contact with the filler portion 120 based on the longitudinal direction of the battery stack 220 and may partition the accommodation space 130. The heat blocking assembly 300 may be in contact with the upper bracket 400 and a lower cover 140 based on the height direction of the battery stack 220 (the direction parallel to the Z-axis of FIG. 2) and may partition the accommodation space 130.

The heat blocking assembly 300 may partition the battery accommodation space 130 to prevent heat of the battery accommodation space 130-3 from being transferred to the adjacent battery accommodation space 130-4.

A height (in the Z-axis direction of FIG. 2) of the heat blocking assembly 300 may be formed higher than a height of the battery stack 220. As will be described in detail later, a protruding portion of the heat blocking assembly 300 further protruding than the battery stack 220 may be positioned between side portions 430 of the upper bracket 400.

The heat blocking assembly 300 may comprise the first blocking member 310 and a compression member 320.

The first blocking member 310 may comprise a material with at least one property of flame retardancy, heat insulation, heat resistance, or insulation.

A flame retardant material may be a material that does not easily catch fire when the material is exposed to fire, or does not easily spread even if the material catches fire. A heat insulation material may be a material that blocks the conduction or transfer of heat. In other words, a material with good insulation properties may be a material that is effective to reduce temperature changes or energy loss by not easily transferring heat.

A heat-resistant material may comprise a material that can withstand high temperatures without deformation or damage. In other words, the heat-resistant material may be a material that maintains physical and chemical stability at high temperatures. For example, the high temperature may be 200 °C or higher. An insulation material may be a material that has the property of blocking the flow of electricity.

For example, the first blocking member 310 may comprise at least some of a mica sheet, alumina, graphite, silicate, or aerogel.

However, the material of the first blocking member 310 is not limited thereto, and is not limited to a specific material as long as it can maintain its shape in a thermal runaway situation of the battery stack 220 and prevent heat or flame from spreading to other adjacent battery stacks 220.

The compression member 320 may be arranged on at least a portion of at least one side of the first blocking member 310. The compression member 320 may be arranged so as to be in surface contact with at least a portion of the first blocking member 310 and the upper bracket 400. A surface of the compression member 320 may be in contact with the battery stack 220, and another surface may be in contact with the first blocking member 310.

The compression member 320 may have elasticity and pressurize the battery stack 220 or the first blocking member 310. For example, the compression member 320 may comprise at least one of polyurethane, silicone, or rubber (EPDM). The compression member 320 may pressurize the battery stack 220 by using the elasticity of these materials.

The compression member 320 may be elastically compressed between the battery stack 220 and the first blocking member 310 to press a space between the battery stack 220 and the first blocking member 310. When the compression member 320 is connected to the surface of the first blocking member 310 as described above, a pressing force between the upper bracket 400 and the first blocking member 310 can be improved. Therefore, when one of the battery stacks 220 is overheated or explodes, the heat of the accommodation space 130 in which the corresponding battery stack 220 is positioned can be prevented from being transferred to the accommodation space 130 in which the adjacent battery stack 220 is positioned.

FIG. 4 illustrates that a height of the compression member 320 is the same as a height of the first blocking member 310, by way of example. However, the height of the compression member 320 may be different from the height of the first blocking member 310. This is described in detail later.

The upper bracket 400 is described below with reference to FIG. 2 and FIGS. 5 to 8.

The upper bracket 400 may cover the open upper surface of the housing 100. The upper bracket 400 may be positioned between the upper surface of the battery stack 220 and the cover member 600.

The upper bracket 400 may comprise a stainless steel-based material.

The upper bracket 400 may comprise a base portion 410 and the side portion 430.

The base portion 410 may be positioned on an upper portion of the battery stack 220 and may cover the open upper surface of the housing 100.

The base portion 410 may be elongated in the longitudinal direction of the battery stack 220 (in the Y-axis direction of FIG. 2). The base portion 410 may be formed in a flat shape, but may be formed in a curved shape as needed.

A length of the base portion 410 may be the same as a length of the battery stack 220, but may be different from the length of the battery stack 220. For example, the length of the base portion 410 may be longer than the length of the battery stack 220, or conversely, may be shorter than the length of the battery stack 220. When the length of the base portion 410 is shorter than the length of the battery stack 220, a plurality of base portions 410 may be connected in the longitudinal direction of the battery stack 220.

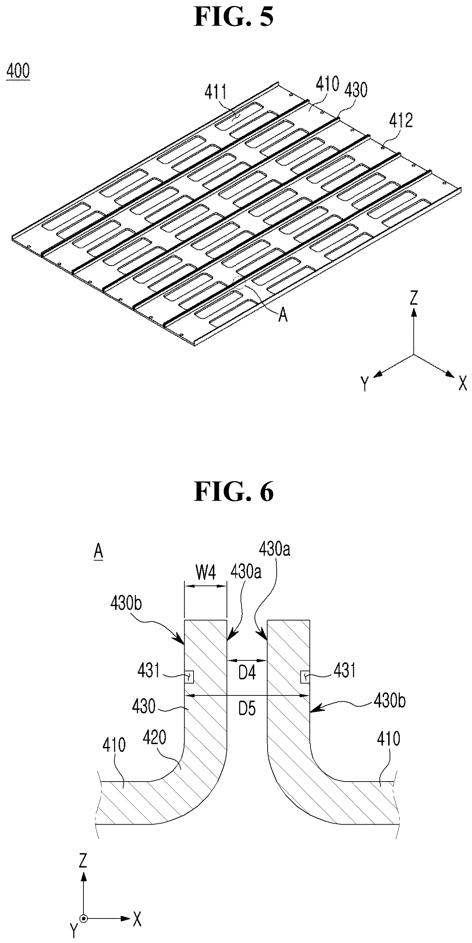

A width of the base portion 410 (a length in the X-axis direction of FIG. 5) may be formed to correspond to a width of the battery stack 220. For example, the width of one upper bracket 400 may correspond to the width of one battery stack 220. However, the width of the base portion 410 may not necessarily correspond to the width of the battery stack 220.

For example, referring to FIG. 2, six battery stacks 220 are accommodated in the accommodation space 130 of the housing 100, and six upper brackets 400 are also arranged, but the number of upper brackets 400 may be different from the number of battery stacks 220. For example, if a length of one upper bracket 400 in a width direction (in a direction parallel to the X-axis direction of FIG. 2) is formed to correspond to a length of two or more battery stacks 220 in the width direction, the number of upper brackets 400 may be different from the number of battery stacks 220. In addition, the number of upper brackets 400 may be less than the number of battery stacks 220.

Referring to FIG. 5, a first flow hole 411 may be elongated in the longitudinal direction of the base portion 410. The first flow hole 411 may penetrate the base portion 410 in the up-down direction. A cross-sectional shape of the first flow hole 411 is illustrated as a rectangular shape, but is not limited thereto. The cross-sectional shape of the first flow hole 411 may be a curved shape such as an oval, or may be formed in an irregular shape other than a rectangle. Alternatively, the first flow hole 411 may be elongated in a width direction of the base portion 410.

The size of a cross-sectional area of the first flow hole 411 and a distance between the adjacent first flow holes 411 may be changed as needed. In addition, the distances between the adjacent first flow holes 411 may be formed at equal intervals as illustrated in FIG. 5, but is not limited thereto. For example, the distances between the first flow holes 411 may be different from each other.

The plurality of first flow holes 411 may be formed along the longitudinal direction of the base portion 410 (a direction parallel to the Y-axis of FIG. 5) or the stacking direction. The accommodation space 130 in which the battery stack 220 is accommodated may communicate with the outside through the first flow holes 411. Therefore, when the battery stack 220 is overheated, a high-temperature gas in the accommodation space 130 in which the overheated battery stack 220 is accommodated may be discharged to the outside of the accommodation space 130 through the first flow holes 411.

Referring to FIG. 2, when the battery stack 220 is overheated, the accommodation space 130-1 may be closed by the filler portion 120 in the longitudinal direction of the battery stack 220, thereby controlling the movement of heat. Accordingly, the third plate 2135 of the battery cover 213 surrounding the battery cell 211 is opened outward (upward), and the high-temperature gas inside the battery stack 220 may be discharged to the outside of the accommodation space 130 through the first flow holes 411.

Referring again to FIG. 5, second flow holes 412 may be formed at both ends of the base portion 410 in the longitudinal direction (Y-axis direction in FIG. 5). The second flow holes 412 may be positioned on an upper side of the accommodation space 130-2 in which the electronic components electrically connected to the battery cells 211 are accommodated. In the same manner as the first flow holes 411, the second flow holes 412 may allow the gas in the housing 100 to communicate with the outside.

A cross-sectional shape of the second flow hole 412 may be circular. However, the cross-sectional shape of the second flow hole 412 is not limited thereto and may be changed as needed. In addition, the number and size of the second flow holes 412 formed at the end of the base portion 410 may also be changed as needed by the designer.

The side portion 430 may extend upward (Z-axis direction in FIG. 6) from the base portion 410. At least a portion of the side portion 430 may be in surface contact with the heat blocking assembly 300 based on the height direction of the battery cell 211.

The side portion 430 may be formed integrally with the base portion 410. Alternatively, the side portion 430 may be separately formed and coupled to the base portion 410 by welding or the like.

A fitting groove 431 may be formed at a predetermined height on an outer surface 430b of the side portion 430. The fitting groove 431 may be formed in a bent portion 420. The fitting groove 431 may be a groove to which the upper clip 500 is fitted and coupled. A height and depth of the fitting groove 431 may correspond to a thickness and length of a lower plate 530 of the upper clip 500 coupled to the fitting groove 431.

The side portion 430 may extend directly from the base portion 410. The side portion 430 may extend in a substantially vertical direction (Z-axis direction in FIG. 5) from the base portion 410. Alternatively, the upper bracket 400 may further comprise the bent portion 420 that connects the base portion 410 and the side portion 430. The upper bracket 400 may comprise the bent portion 420 extending from the base portion 410 and the side portion 430 extending from the bent portion 420.

Referring to FIG. 6, the side portion 430 may extend from the base portion 410 with the bent portion 420 having a predetermined curvature interposed between the base portion 410 and the side portion 430.

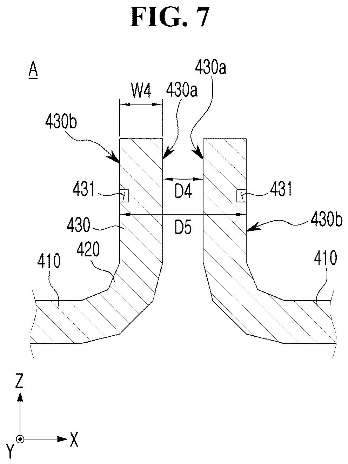

Referring to FIG. 7, the bent portion 420 may be formed as a flat surface rather than a curved surface with the curvature. The bent portion 420 may comprise one or more flat members. The number of bent portions 420 may vary depending on a distance or connection height between the side portion 430 and the base portion 410. The bent portion 420 may be formed integrally with the side portion 430 and the base portion 410, or they may be separately formed and then coupled.

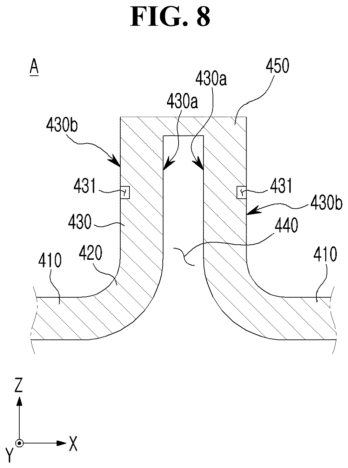

Referring to FIG. 8, the upper bracket 400 may be formed integrally.

For example, the upper bracket 400 may comprise the base portion 410, the side portion 430 extending from the base portion 410, and a connection portion 450 which extends from the side portion 430 to connect the side portion 430 and an adjacent side portion 430. The upper bracket 400 may comprise a protruding groove 440 surrounded by the side portion 430 and the connection portion 450.

As described above, the number of upper brackets 400 illustrated in FIG. 2 may be six. Alternatively, the upper brackets 400 illustrated in FIG. 2 may be formed integrally. In this case, the side portions 430 may be connected by the connection portion 450.

The connection portion 450 may extend from the other end of the side portion 430 in a direction substantially parallel to the base portion 410. When the other end of the side portion 430 is connected by the connection portion 450, the protruding groove 440 may be formed between the side portion 430 and the connection portion 450. The heat blocking assembly 300 may be positioned in the protruding groove 440.

When the upper bracket 400 is not formed as one body and the plurality of upper brackets 400 is arranged, the plurality of adjacent upper brackets 400 may not be in contact with each other and may be spaced apart from each other. A separation distance D4 between the adjacent upper brackets 400 may be equal to or less than a width (W6 in FIG. 4) of the heat blocking assembly 300. In this case, the separation distance D4 between the upper brackets 400 may be a distance D4 between an inner surface portion 430a and an adjacent inner surface portion 430a. The width W6 of the heat blocking assembly 300 may be a distance between outer surfaces 300b of the heat blocking assembly 300.

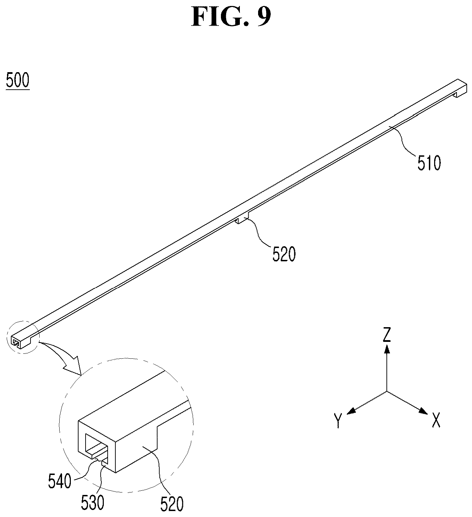

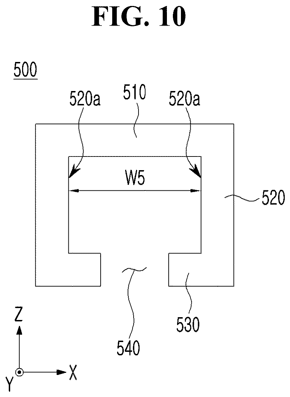

The upper clip 500 is described below with reference to FIGS. 9 and 10.

The upper clip 500 may connect a pair of upper brackets 400. The upper clip 500 may be in contact with the outer surfaces 430b of the upper brackets 400 and couple the upper brackets 400 that are spaced apart from each other. The upper clip 500 may pressurize and connect the upper brackets 400.

The upper clip 500 may comprise the same material as the upper bracket 400.

The upper clip 500 may comprise an upper plate 510, a side plate 520, and a lower plate 530.

The upper plate 510 may be elongated along the longitudinal direction of the upper bracket 400. A length of the upper plate 510 may be the same as the length of the upper bracket 400. Alternatively, when the length of the upper plate 510 is less than the length of the upper bracket 400, the plurality of upper clips 500 may be coupled to one upper bracket 400.

The side plates 520 may extend from both ends in a longitudinal direction of the upper plate 510 in a downward direction of the upper plate 510. The side plate 520 may extend downward from each of both ends in a width direction of the upper plate 510. The side plates 520 may be formed as a pair of plates facing each other in a parallel direction.

The number of side plates 520 may vary depending on the length of the upper plate 510. The position of the side plates 520 may also vary depending on the length of the upper plate 510. The side plates 520 are formed in a middle portion based on both ends of the upper plate 510 and the longitudinal direction, and a total of three pairs of side plates 520 are formed to extend. However, the position of the side plates 520 is not limited thereto. For example, when two pairs of side plates 520 extend from the upper plate 510, the side plates 520 do not necessarily extend from both ends in the longitudinal direction of the upper plate 510, and may be formed at different positions along the longitudinal direction of the upper plate 510 as needed.

The side plates 520 may extend downward from the upper plate 510 and may be connected to the upper plate 510 at approximately a right angle. Alternatively, the side plate 520 may extend from the upper plate 510 to form a curvature.

Referring to FIG. 10, a distance W5 between inner surfaces 520a of the opposing side plates 520 may be approximately equal to or less than the distance (D5 in FIG. 6) between the outer surfaces (430b in FIG. 6) of the adjacent upper brackets 400.

When the distance W5 between the inner surfaces 520a of the opposing side plates 520 is equal to or less than the distance D5 between the outer surfaces of the adjacent upper brackets 400, the upper clip 500 and the upper bracket 400 may be connected in a forced fit manner. Accordingly, a coupling force between the upper clip 500 and the upper bracket 400 can be improved,.

The lower plate 530 may extend from the side plate 520 in an inward direction of the upper clip 500. The lower plate 530 may extend from each of a pair of side plates 520 in a direction that brings them closer to each other. The lower plates 530 may be spaced apart from each other, and an insertion hole 540 into which the upper bracket 400 can be inserted may be formed between the lower plates 530.

The upper bracket 400 may be inserted into the insertion hole 540. The fitting groove 431 may be formed on the outer surface 430b of the upper bracket 400 so that the lower plate 530 can be inserted. That is, the lower plate 530 of the upper clip 500 may be coupled to the fitting groove 431 of the upper bracket 400 in a fitting manner.

FIG. 10 illustrates that the lower plate 530 extends from the side plate 520 in a substantially vertical direction, by way of example. However, the lower plate 530 may extend to form a curvature with the side plate 520.

FIG. 2 illustrates that the upper clip 500 is separately from the upper bracket 400, by way of example. However, the upper clip 500 may be formed integrally with the upper bracket 400.

The battery module 10 according to an embodiment of the present disclosure is described below with reference to FIG. 2 and FIGS. 11 to 14.

The housing 100 of the battery module 10 according to an embodiment of the present disclosure may accommodate at least one battery cell 211. The housing 100 may comprise the main frame 110 forming its perimeter.

The accommodation space 130 accommodating the battery cell 211 may be formed in the housing 100.

The cover member 600 may cover the accommodation space 130 and may be coupled to the housing 100. The surface of the cover member 600 coupled to the housing 100 may be a surface in the stacking direction, the longitudinal direction, or the height direction of the battery cell 211.

At least one battery cell 211 may be arranged in the accommodation space 130. When the plurality of battery cells 211 are accommodated, the plurality of battery cells 211 may be stacked in one direction. The heat blocking assembly 300 may be arranged between the plurality of battery cells 211. The battery cells 211 stacked between the adjacent heat blocking assemblies 300 may form the battery stack 220. However, the battery stack 220 may comprise one battery cell 211 as needed.

The plurality of battery cells 211 or the plurality of battery assemblies 210 may be stacked in the accommodation space 130. The battery assembly 210 may comprise the battery cell 211, the battery cover 213 covering the battery cell 211, and the second blocking member 212 that is accommodated in the battery cover 213 and is positioned on the upper side of the battery cell 211.

When the plurality of battery cells 211 are stacked in the accommodation space 130, the second blocking member 212 may be positioned on the upper side of the battery cell 211. The second blocking member 212 may be positioned on the upper side of the battery cell 211 while being in contact with the upper surface of the battery cell 211.

The heat blocking assembly 300 may partition the accommodation space 130 along with the filler portion 120. The accommodation space 130 may be partitioned by the filler portion 120 in the longitudinal direction of the battery stack 220, and may be partitioned by the heat blocking assembly 300 in the stacking direction of the battery stacks 220.

The heat blocking assembly 300 partitions the battery accommodation space 130 and thus can prevent heat or fire generated from one battery cell 211 from being transferred or spread to the adjacent battery accommodation space 130.

The heat blocking assembly 300 may comprise the first blocking member 310 and the compression member 320.

The heat blocking assembly 300 may be arranged between the battery stacks 220 and may be formed higher than the battery stack 220 in a height direction of the battery stack 220. At least a portion of a portion of the heat blocking assembly 300 that protrudes further than the battery stack 220 in the height direction may be in contact with the side portion 430 of the upper bracket 400.

The heat blocking assembly 300 may partition the accommodation space 130 accommodating the battery stacks 220 and prevent heat transfer between the adjacent battery stacks 220. To this end, the first blocking member 310 may comprise a material including a heat-resistant material or a heat insulation material.

A protruding height H3 of the heat blocking assembly 300 may be less than or equal to a height H4 of the upper bracket 400. The height H4 of the side portion 430 based on an upper surface of the battery stack 220 may be greater than or equal to the protruding height H3 of the heat blocking assembly 300.

The protruding height H3 of the heat blocking assembly 300 may be a distance from an upper surface of the second blocking member 212 to an upper surface 300c of the heat blocking assembly 300. If a height of an upper surface 310c of the first blocking member 310 and a height of an upper surface 320c of the compression member 320 are different, the protruding height H3 of the heat blocking assembly 300 may be a distance of the higher member.

The height H4 of the upper bracket 400 may be a distance from the upper surface of the second blocking member 212 to an upper surface 430c of the side portion 430 of the upper bracket 400.

In the battery module 10 according to an embodiment, when the battery cells 211 are stacked in the accommodation space 130, the upper surface of the battery stack 220 including the battery cells 211 may be used as a reference line for height measurement.

If the protrusion height of the heat blocking assembly 300 and the height of the upper bracket 400 are the same, there may be no separation space between the heat blocking assembly 300 and the upper clip 500 based on the height direction of the battery assembly 210.

The compression member 320 may have elasticity. The compression member 320 may be arranged on at least a portion of one surface of the first blocking member 310. At a point where the heat blocking assembly 300 is in contact with the upper bracket 400, the compression member 320 may press a space between the first blocking member 310 and the upper bracket 400.

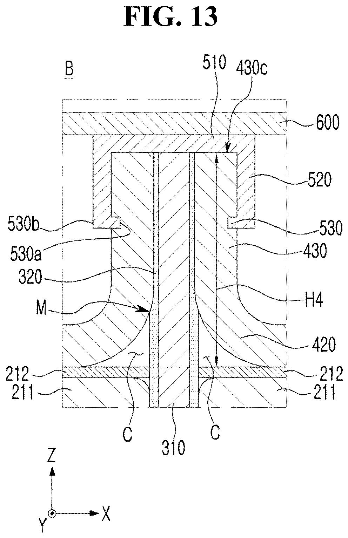

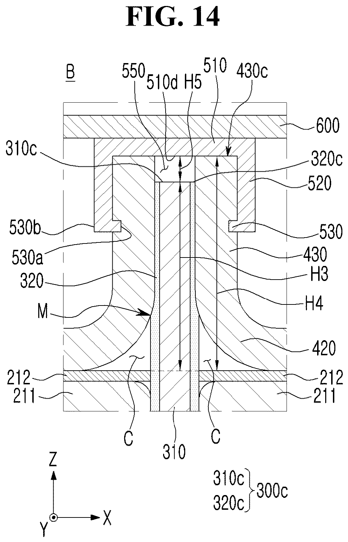

Referring to FIGS. 13 and 14, a flow path C through which air can move may be formed between the upper bracket 400, the battery cell 211, and the heat blocking assembly 300. The compression member 320 may be compressively elastically deformed between the upper bracket 400 and the first blocking member 310, and may press a point where the upper bracket 400 and the first blocking member 310 are in contact with each other. Accordingly, the air in the flow path C can be restricted from moving upward.

The flow path C may communicate with the first flow hole 411. Gas moving through the flow path C may be discharged to the outside of the accommodation space 130 through the first flow hole 411.

The upper bracket 400 may be arranged on the upper portion of the battery stack 220.

The base portion 410 of the upper bracket 400 may be elongated in the longitudinal direction of the battery cell 211. At least one first flow hole 411 may be formed along the longitudinal direction and the width direction of the base portion 410. The first flow hole 411 may allow each accommodation space 130 to communicate with an external space of the housing 100. Therefore, when the battery stack 220 accommodated in each accommodation space 130 is overheated, a high-temperature gas in the accommodation space 130 can be discharged to the outside through the first flow hole 411.

The high-temperature air discharged to the outside of the accommodation space 130 through the first flow hole 411 can be discharged to the outside of the housing 100 through a vent hole (not shown) formed in the cover member 600 or the main frame 110.

The plurality of upper brackets 400 may be arranged. The separation distance D4 between adjacent upper brackets 400 may be equal to or less than the width W6 of the heat blocking assembly 300.

The plurality of upper brackets 400 may be formed integrally. For example, the side portions 430 may be connected by the connection portion 450. The connection portion 450 may extend from the other end of the side portion 430 in a direction substantially parallel to the base portion 410. The protruding groove 440 may be formed between the side portion 430 and the connection portion 450. The heat blocking assembly 300 may be inserted into the protruding groove 440.

The upper clip 500 may connect the plurality of upper brackets 400. The upper clip 500 may comprise the upper plate 510, the side plate 520, and the lower plate 530.

The upper plate 510 may be elongated in one direction correspondingly to the base portion 410. The side plates 520 may extend downward from the upper plate 510 to form a pair. The lower plate 530 may extend from the side plate 520 in a direction approaching each other. The lower plate 530 may extend from each of the pair of side plates 520 to form a pair in the same manner as the side plate 520. The lower plates 530 may be spaced apart from each other, and the insertion hole 540 may be formed between the lower plates 530.

The upper bracket 400 may be inserted into the insertion hole 540. The lower plate 530 of the upper clip 500 may be inserted into the fitting groove 431 formed on the outer surface 430b of the upper bracket 400 and may be connected in a forced fit manner.

As the upper clip 500 and the upper bracket 400 are connected in the forced fit manner, the side plate 520 of the upper clip 500 may pressurize the side portion 430 of the upper bracket 400 in a direction approaching each other. Referring to FIGS. 13 and 14, the side plate 520 may pressurize the side portion 430 while being in surface contact with the side portion 430. If the side plate 520 is formed in a curved surface, the lower plate 530 may be fitted and coupled to the fitting groove 431, and the upper clip 500 may pressurize the upper bracket 400.

An end 530a of the lower plate 530 facing the fitting groove 431 may be positioned on an upper side based on another end 530b connected to the side plate 520. In this case, the upper clip 500 does not detach from the upper bracket 400, and a coupling force between the upper clip 500 and the upper bracket 400 can be improved.

Referring to FIGS. 13 and 14, the upper surface 320c of the compression member 320 may be formed to the same height as the upper surface 310c of the first blocking member 310. Alternatively, the upper surface 320c of the compression member 320 may be arranged only to a portion lower than the upper surface 310c of the first blocking member 310. When the compression member 320 is formed shorter than the first blocking member 310, a minimum length of the compression member 320 may be higher than a point M where the upper bracket 400 is in contact with the first blocking member 310. When the minimum length of the compression member 320 is formed as above, the compression member 320 may be elastically deformed, and the space between the first blocking member 310 and the upper bracket 400 may be pressed. Hence, a pressing force of the flow path C can be improved.

The accommodation space 130 in the housing 100 may be partitioned to prevent gas in the left accommodation space 130-3 from moving to the right accommodation space 130-4, or prevent gas in the right accommodation space 130-4 from moving to the left accommodation space 130-3. Accordingly, even if the battery stack 220 of the left accommodation space 130-3 is overheated or exploded, the heat conduction of the battery module can be minimized by the first blocking member 310. In addition, since each accommodation space 130 is partitioned to the first blocking member 310, the compression member 320, and the upper bracket 400, the heat of the left accommodation space 130-3 may not be transferred to the right accommodation space 130-4.

Referring to FIG. 14, the height of the heat blocking assembly 300 may be lower than the height of the upper bracket 400. A separation space 550 may be formed between the upper surface 300c of the heat blocking assembly 300 and a lower surface 510d of the upper plate 510 of the upper clip 500.

When the separation space 550 is formed, impact from outside the battery module 10 can be prevented from being transferred to the heat blocking assembly 300 or the battery assembly 210, thereby preventing damage to the entire battery module 10. In addition, even if an error occurs during design and product manufacturing processes, a problem in that the heat blocking assembly 300 protrudes higher than the side portion 430 of the upper bracket 400 can be prevented because the separation space 550 is formed during the design process.

On the contrary, if the heat blocking assembly 300 is formed higher than the side portion 430 of the upper bracket 400, a problem may occur in which the upper clip 500 is not connected to the upper bracket 400, or even if connected, the upper clip 500 is damaged due to the protruding portion of the first blocking member 310. Alternatively, a problem may occur in which the first blocking member 310 or other components are damaged due to the protruding portion of the heat blocking assembly 300 while transporting the components during the manufacturing process of the battery module 10.

A height H5 of the separation space 550 may be approximately 0.1 mm to 2.0 mm. If the height H5 of the separation space 550 is designed to be less than 0.1 mm, the height of the heat blocking assembly 300 may be formed to be higher than the height of the upper bracket 400 due to a process error during the product manufacturing process. In this case, as described above, there is a risk that the upper clip 500 may not be connected to the upper bracket 400 or that the upper clip 500 may be damaged. If the height H5 of the separation space 550 is designed to be greater than 2.0 mm, there is a risk that the thickness of the battery module 10 may become excessively high.

The present disclosure provides embodiments according to the following aspects.

First aspect: A battery module comprises a housing 100 in which at least one battery cell 211 is arranged, a heat blocking assembly 300 arranged on at least a surface of the battery cell 211, and an upper bracket 400 arranged on an upper portion of the battery cell 211. Based on a height direction of the battery cell 211, at least a portion of the upper bracket 400 is in surface contact with the heat blocking assembly 300.

Second aspect: According to the first aspect, the upper bracket 400 comprises a base portion 410 arranged on the upper portion of the battery cell 211, and a side portion 430 extending from the base portion 410 to the upper portion of the battery cell 211. Preferably, based on an upper surface of the battery cell 211, a height of the side portion 430 is equal to or greater than a height of the heat blocking assembly 300.

Third aspect: According to the second aspect, the upper bracket 400 further comprises a bent portion 420 connecting the base portion 410 and the side portion 430.

Fourth aspect: According to the second or third aspect, the at least one battery cell 211 comprises a plurality of battery cells 211, and a plurality of upper brackets 400 is arranged on upper portions of the plurality of battery cells 211. The battery module further comprises an upper clip 500 connecting the plurality of adjacent upper brackets 400. Preferably, the upper clip 500 pressurizes and connects the plurality of upper brackets 400.

Fifth aspect: According to the fourth aspect, the upper clip 500 comprises an upper plate 510, a pair of side plates 520 bent downward from both ends of the upper plate 510, and a pair of lower plates 530 extending from lower ends of the pair of side plates 520 in a direction approaching each other. Preferably, a pair of side portions 430 extend from both ends of the base portion 410, respectively. The pair of side plates 520 are in surface contact with the pair of side portions 430 and pressurize the pair of side portions 430 in a direction approaching each other.

Sixth aspect: According to the fifth aspect, a fitting groove 460 is formed on an outer surface of the side portion 430, and an end of the lower plate 530 is inserted into the fitting groove 460. Preferably, a distance between inner surfaces of the side plates 520 is equal to or less than a distance between outer surfaces of the adjacent side portions 430.

Seventh aspect: According to any one of the second to sixth aspects, the side portion 430 comprises a plurality of side portions 430, and the upper bracket 400 further comprises a connection portion 480 connecting the side portions 430 which are adjacent to each other. At least a portion of the heat blocking assembly 300 is arranged between the adjacent side portions 430.

Eighth aspect: According to any one of the first to seventh aspects, the plurality of battery cells 211 is accommodated in the housing 100. The heat blocking assembly 300 comprises a first blocking member 310 arranged between the plurality of battery cells 211, and a compression member 320 arranged between the first blocking member 310 and the upper bracket 400. Preferably, a height of the first blocking member 310 is equal to or greater than a height of the compression member 320.

Ninth aspect: According to any one of the first to eight aspects, the upper bracket 400 comprises a first flow hole 411 penetrating the upper bracket 400.

Tenth aspect: According to any one of the first to the ninth aspects, the battery module further comprises a battery cover 213 surrounding the battery cell 211, and a second blocking member 212 accommodated in the battery cover 213 and arranged on an upper side of the battery cell 211. The heat blocking assembly 300 is arranged on at least a surface of the battery cover 213.

Eleventh aspect: A battery module comprises a housing 100, a plurality of battery cells 211 arranged in the housing 100, a heat blocking assembly 300 arranged between the plurality of battery cells 211, a height of the heat blocking assembly 300 being formed higher than heights of the plurality of battery cells 211, an upper bracket 400 arranged on upper portions of the battery cells 211 and covering the battery cells 211, at least a portion of the upper bracket 400 being bent in a direction parallel to a height direction of the battery cells 211, and a cover member 600 covering the housing 100.

Twelfth aspect: According to the eleventh aspect, the upper bracket 400 comprises a plurality of upper brackets 400. The battery module further comprises an upper clip 500 that couples the adjacent upper brackets 400 and pressurizes the upper brackets 400 in a direction approaching each other.

Thirteenth aspect: According to the eleventh or twelfth aspect, the heat blocking assembly 300 comprises a first blocking member 310 partitioning between the plurality of battery cells 211, and a compression member 320 arranged between the first blocking member 310 and the upper bracket 400.

Fourteenth aspect: According to any one of the eleventh to thirteenth aspects, based on the height direction of the battery cells 211, an end surface of the heat blocking assembly 300 is positioned lower than an end surface of the upper bracket 400.

Fifteenth aspect: According to any one of the eleventh to fourteenth aspects, a flow path through which air is able to move is formed between the upper bracket 400, the battery cells 211, and the heat blocking assembly 300.

Although the preferred embodiments of the present disclosure have been described in detail above, the scope of the present disclosure is not limited thereto, and various modifications and improvements made by those skilled in the art using the basic concept of the present disclosure defined in the following claims also fall within the scope of the present disclosure.

## Claims

1. A battery module comprising:
a housing (100) in which at least one battery cell (211) is arranged;
a heat blocking assembly (300) arranged on at least a surface of the battery cell (211); and
an upper bracket (400) arranged on an upper portion of the battery cell (211),
wherein based on a height direction of the battery cell (211), at least a portion of the upper bracket (400) is in surface contact with the heat blocking assembly (300).

2. The battery module of claim 1, wherein the upper bracket (400) comprises:
a base portion (410) arranged on the upper portion of the battery cell (211); and
a side portion (430) extending from the base portion (410) to the upper portion of the battery cell (211),
wherein preferably, based on an upper surface of the battery cell (211), a height of the side portion (430) is equal to or greater than a height of the heat blocking assembly (300).

3. The battery module of claim 2, wherein the upper bracket (400) further comprises a bent portion (420) connecting the base portion (410) and the side portion (430).

4. The battery module of claim 2 or 3, wherein the at least one battery cell (211) comprises a plurality of battery cells (211),
wherein a plurality of upper brackets (400) is arranged on upper portions of the plurality of battery cells (211),
wherein the battery module further comprises an upper clip (500) connecting the plurality of adjacent upper brackets (400), and
wherein preferably, the upper clip (500) pressurizes and connects the plurality of upper brackets (400).

5. The battery module of claim 4, wherein the upper clip (500) comprises:
an upper plate (510);
a pair of side plates (520) bent downward from both ends of the upper plate (510); and
a pair of lower plates (530) extending from lower ends of the pair of side plates (520) in a direction approaching each other,
wherein preferably, a pair of side portions (430) extend from both ends of the base portion (410), respectively, and
wherein the pair of side plates (520) are in surface contact with the pair of side portions (430) and pressurize the pair of side portions (430) in a direction approaching each other.

6. The battery module of claim 5, wherein a fitting groove (460) is formed on an outer surface of the side portion (430),
wherein an end of the lower plate (530) is inserted into the fitting groove (460), and
wherein preferably, a distance between inner surfaces of the side plates (520) is equal to or less than a distance between outer surfaces of the adjacent side portions (430).

7. The battery module of any one of claims 2 to 6, wherein the side portion (430) comprises a plurality of side portions (430),
wherein the upper bracket (400) further comprises a connection portion (480) connecting the side portions (430) which are adjacent to each other, and
wherein at least a portion of the heat blocking assembly (300) is arranged between the adjacent side portions (430).

8. The battery module of any one of claims 1 to 7, wherein the plurality of battery cells (211) is accommodated in the housing (100),
wherein the heat blocking assembly (300) comprises:
a first blocking member (310) arranged between the plurality of battery cells (211); and
a compression member (320) arranged between the first blocking member (310) and the upper bracket (400),
wherein preferably, a height of the first blocking member (310) is equal to or greater than a height of the compression member (320).

9. The battery module of any one of claims 1 to 8, wherein the upper bracket (400) comprises a first flow hole (411) penetrating the upper bracket (400).

10. The battery module of any one of claims 1 to 9, further comprising:
a battery cover (213) surrounding the battery cell (211); and
a second blocking member (212) accommodated in the battery cover (213) and arranged on an upper side of the battery cell (211),
wherein the heat blocking assembly (300) is arranged on at least a surface of the battery cover (213).

11. A battery module comprising:
a housing (100);
a plurality of battery cells (211) arranged in the housing (100);
a heat blocking assembly (300) arranged between the plurality of battery cells (211), a height of the heat blocking assembly (300) being formed higher than heights of the plurality of battery cells (211);
an upper bracket (400) arranged on upper portions of the battery cells (211) and covering the battery cells (211), at least a portion of the upper bracket (400) being bent in a direction parallel to a height direction of the battery cells (211); and
a cover member (600) covering the housing (100).

12. The battery module of claim 11, wherein the upper bracket (400) comprises a plurality of upper brackets (400), and
wherein the battery module further comprises an upper clip (500) that couples the adjacent upper brackets (400) and pressurizes the upper brackets (400) in a direction approaching each other.

13. The battery module of claim 11 or 12, wherein the heat blocking assembly (300) comprises:
a first blocking member (310) partitioning between the plurality of battery cells (211); and
a compression member (320) arranged between the first blocking member (310) and the upper bracket (400).

14. The battery module of any one of claims 11 to 13, wherein based on the height direction of the battery cells (211), an end surface of the heat blocking assembly (300) is positioned lower than an end surface of the upper bracket (400).

15. The battery module of any one of claims 11 to 14, wherein a flow path through which air is able to move is formed between the upper bracket (400), the battery cells (211), and the heat blocking assembly (300).
